# EUROPEAN PATENT APPLICATION

(11) **EP 4 678 935 A1**
(43) Date of publication of application: **14.01.2026**
(21) Application number: 24766772.8
(22) Date of filing: 09.02.2024
(51) Int. Cl.: F16F 9/49, F16F 1/08, F16F 9/18, F16F 9/32, F16F 9/58

(54) **SHOCK ABSORBER**

(30) Priority: 09.03.2023 JP 2023036574
(71) Applicant: KYB Motorcycle Suspension Co., Ltd., Kani-shi, Gifu 509-0297 (JP)
(72) Inventor: AKIMOTO, Masanobu, Kani-shi, Gifu 509-0297 (JP); JINNOUCHI, Takahiko, Kani-shi, Gifu 509-0297 (JP)
(74) Representative: MFG Patentanwälte Meyer-Wildhagen Meggle-Freund Gerhard PartG mbB
(86) International application number: PCT/JP2024/004473
(87) International publication number: WO 2024/185399

(57) **Abstract**

A shock absorber (D) according to the present invention includes: a cylinder (1); a piston rod (2) movably inserted into the cylinder (1); a piston (3) connected to the piston rod (2) ; a sub-cylinder (4) housed in the compression side chamber (R2); and a partition wall (5) partitioning the inside of the sub-cylinder (4) into a hydraulic pressure lock chamber (L) and a compensation chamber (R). The compensation chamber (R) has a gas chamber (G) and a liquid chamber (A) communicating with the compression side chamber (R2). When the piston rod (2) moves in which the compression side chamber (R2) is compressed and a distal end of the piston rod (2) or a connecting member is inserted into the hydraulic pressure lock chamber (L), the hydraulic pressure lock chamber (L) suppresses the movement of the piston rod (2) in the contraction direction by internal pressure.

## Description

### Technical Field

The present invention relates to a shock absorber.

### Background Art

For example, as disclosed in JP 2020-008150 A, a shock absorber includes a cylinder; a piston rod movably inserted into the cylinder; a piston connected to the piston rod, movably inserted into the cylinder, and partitions the inside of the cylinder into an extension side chamber and a compression side chamber filled with hydraulic oil; a piston rod movably inserted into the cylinder and connected to the piston; and a free piston movably inserted into the cylinder in an axial direction and forming a gas chamber facing the compression side chamber in the cylinder. The shock absorber is interposed between a vehicle body and a rear wheel of a straddle-type vehicle to generate damping force that suppresses vibration of the vehicle body during extension and contraction.

### Citation List

### Patent Literature

Patent Literature 1: JP 2020-008150 A

### Summary of Invention

### Technical Problem

In the conventional shock absorber, when the conventional shock absorber performs contraction to cause the piston to move in a direction of compressing the compression side chamber with respect to the cylinder, a compression side leaf valve configured to open and close a compression side port provided in the piston opens and the hydraulic oil moves from the compression side chamber to the extension side chamber. Therefore, a difference occurs between the pressure of the compression side chamber and the pressure of the extension side chamber, and compression side damping force that suppresses the contraction can be generated.

In such a conventional shock absorber, the compression side damping force can be generated and the vibration of the vehicle body can be suppressed. However, in a case where it is forced to travel on a rough road in an area where road improvement has not progressed or the like, when the shock absorber contracts to the vicinity of a stroke end, the shock absorber may be required to generate compression side damping force larger than before.

In order to meet such a demand, it is necessary to increase the pressure in the compression side chamber during the contraction of the shock absorber. However, in the structure of the conventional shock absorber, the gas chamber faces the compression side chamber via the free piston, and the pressure in the compression side chamber cannot be raised to be equal to or higher than pressure in the gas chamber. Therefore, there is a limit to increasing the compression side damping force.

Thus, an object of the present invention is to provide a shock absorber capable of generating large damping force in the vicinity of a stroke end.

### Solution to Problem

In order to solve the above problems, a shock absorber according to the present invention includes a cylinder; a piston rod movably inserted into the cylinder in an axial direction; a piston connected to the piston rod, movably inserted into the cylinder in the axial direction, and partitioning the inside of the cylinder into an extension side chamber and a compression side chamber; a sub-cylinder housed in the compression side chamber in the cylinder; and a partition wall partitioning the inside of the sub-cylinder into a hydraulic pressure lock chamber and a compensation chamber on a side of the hydraulic pressure lock chamber opposite to the piston. The compensation chamber has a gas chamber and a liquid chamber communicating with the compression side chamber. When the piston rod moves in a contraction direction in which the piston rod compresses the compression side chamber with respect to the cylinder and a distal end of the piston rod or a connecting member connected to the piston rod is inserted into the hydraulic pressure lock chamber, the hydraulic pressure lock chamber suppresses the movement of the piston rod in the contraction direction by internal pressure.

In the shock absorber configured as described above, when the contraction is performed and the piston moves in the contraction direction and the piston rod enters the hydraulic pressure lock chamber, resistance force that suppresses the movement of the piston rod by the pressure of the hydraulic pressure lock chamber can be added to the damping force during the contraction.

### Brief Description of Drawings

Fig. 1 is a cross-sectional view of a shock absorber according to one embodiment.
Fig. 2 is a cross-sectional view of a shock absorber according to a first modification of the one embodiment.

### Description of Embodiments

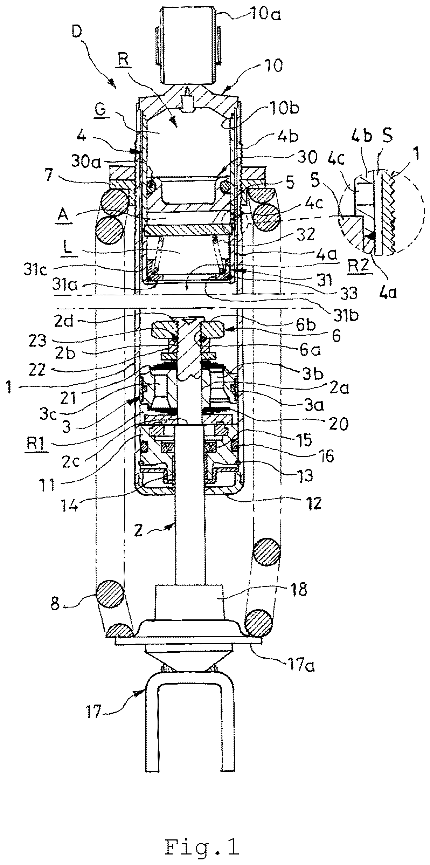

The present invention will be described on the basis of an embodiment illustrated in the drawings. As illustrated in Fig. 1, a shock absorber D in one embodiment includes a cylinder 1; a piston rod 2 movably inserted in the cylinder 1 in an axial direction; a piston 3 connected to the piston rod 2, movably inserted in the cylinder 1 in the axial direction, and partitioning the inside of the cylinder 1 into an extension side chamber R1 and a compression side chamber R2; a sub-cylinder 4 housed in the compression side chamber R2 in the cylinder 1; and a partition wall 5 partitioning the inside of the sub-cylinder 4 into a hydraulic pressure lock chamber L and a compensation chamber R on a side of the hydraulic pressure lock chamber L opposite to the piston. Although not illustrated, the shock absorber D is interposed, for example, between a vehicle body and a rear wheel in a straddle-type vehicle such as a motorcycle and generates damping force during extension and contraction to suppress vibration of the vehicle body. Note that the shock absorber D may be used for vehicles such as automobiles other than the straddle-type vehicle or may be used for devices other than the vehicle, buildings, and the like.

Each parts of the shock absorber D will be described in detail below. An upper end opening edge of the cylinder 1 is closed by a cap 10 that has a tubular shape and is attached to an upper end in Fig. 1. The cap 10 includes a bracket 10a that closes the upper end opening edge of the cylinder 1 and enables connection to the vehicle body of the straddle-type vehicle. A rod guide 11 that has an annular shape and through which the piston rod 2 is inserted is fitted to the inner periphery of the lower end of the cylinder 1 in Fig. 1, and a bump stopper 12 having an annular shape is attached to the opening end of the lower end of the cylinder 1 in Fig. 1. The rod guide 11 is restricted, by a snap ring 13 attached to the inner periphery of the cylinder 1, from moving from the inside of the cylinder 1 toward a downward direction in Fig. 1, which is directed outward from the inside of the cylinder 1, and the rod guide 11 is positioned at a position at which the rod guide 11 is pressed downward in Fig. 1 by the pressure of liquid in the cylinder 1 to abut on the snap ring 13. In addition, a tubular bush 14 slidably in contact with the outer periphery of the piston rod 2 and a seal ring 15 slidably in contact with the outer periphery of the piston rod 2 to seal the outer periphery of the piston rod 2 are placed in the inner periphery of the rod guide 11, and a seal ring 16 in close contact with the inner periphery of the cylinder 1 to seal between the cylinder 1 and the rod guide 11 is placed in the outer periphery of the rod guide 11.

In addition, an upper spring seat 7 having an annular shape is screwed to the outer periphery of the cylinder 1 on the upper side in Fig. 1. When the upper spring seat 7 is rotationally operated with respect to the cylinder 1, the upper spring seat 7 can be displaced in a vertical direction in Fig. 1, which is the axial direction with respect to the cylinder 1.

The piston rod 2 is movably inserted into the cylinder 1 in the axial direction via the inner peripheries of the bump stopper 12 and the rod guide 11, and the piston 3 movably inserted into the cylinder 1 in the axial direction is connected to a distal end of the piston rod 2. The piston rod 2 includes a small-diameter portion 2a provided at the upper end in Fig. 1, which is the distal end, and having an outer periphery to which the piston 3 is attached; a screw portion 2b provided on the outer periphery of the upper end of the small-diameter portion 2a; and a step portion 2c formed between the small-diameter portion 2a and a portion below the small-diameter portion 2a. In addition, a bracket 17 capable of connecting the piston rod 2 to a swing arm supporting the rear wheel of the straddle-type vehicle (not illustrated) is attached to the lower end of the piston rod 2 in Fig. 1, and a bump cushion rubber 18 placed above the bracket 17 is fitted to the outer periphery of the lower end of the piston rod 2. The bump cushion rubber 18 faces the bump stopper 12, which is attached to the lower end of the cylinder 1 in Fig. 1, in the axial direction, and when the shock absorber D strokes toward a contraction side to the vicinity of a stroke end, the bump cushion rubber 18 abuts on the bump stopper 12, is compressed, and exerts resilient force that suppresses a further stroke of the shock absorber D in a contraction direction to mitigate an impact at the time of the maximum contraction of the shock absorber D.

The bracket 17 includes a lower spring seat 17a on the outer periphery thereof, and a suspension spring 8 formed of a coil spring is interposed between the lower spring seat 17a and the upper spring seat 7 attached to the outer periphery of the cylinder 1. The suspension spring 8 biases in a direction of separating the cylinder 1 and the piston rod 2 from each other in the axial direction, that is, in a direction of extending the shock absorber D, and the suspension spring 8 elastically supports the vehicle body by exerting resilient force that interposes the shock absorber D between the vehicle body and the rear wheel of the straddle-type vehicle. Note that since the installation position of the upper spring seat 7 with respect to the cylinder 1 can be changed in the axial direction, the vehicle height of the straddle type vehicle can be adjusted by changing an initial load applied to the suspension spring 8.

A compression side leaf valve 20 having an annular shape, a piston 3 having an annular shape, and an extension side leaf valve 21 having an annular shape are sequentially assembled to the small-diameter portion 2a of the piston rod 2. The compression side leaf valve 20, the piston 3, and the extension side leaf valve 21 are clamped by a piston nut 22 screwed to the screw portion 2b at a distal end of the small-diameter portion 2a and the step portion 2c of the piston rod 2, and are fixed to the small-diameter portion 2a of the piston rod 2.

The piston 3 includes, on the outer periphery thereof, a piston ring 3a slidably in contact with the inner periphery of the cylinder 1, and partitions the inside of the cylinder 1 into the extension side chamber R1 and the compression side chamber R2 that are filled with the liquid. In addition, the piston 3 includes an extension side port 3b and a compression side port 3c that communicate the extension side chamber R1 with the compression side chamber R2. Note that the liquid filled in the extension side chamber R1 and the compression side chamber R2 is, for example, the hydraulic oil, but liquids other than the hydraulic oil can also be used.

The compression side leaf valve 20 is a stacked leaf valve formed by stacking a plurality of annular plates, and is stacked at the lower end of the piston 3 in Fig. 1 while an inner periphery is fixed to the piston rod 2 and deflection on an outer peripheral side is allowed. The compression side leaf valve 20 closes the compression side port 3c when stacked on the piston 3, and the compression side leaf valve 20 opens the compression side port 3c when deflected by receiving the pressure of the compression side chamber R2 that acts via the compression side port 3c.

Meanwhile, the extension side leaf valve 21 is a stacked leaf valve formed by stacking a plurality of annular plates and is stacked on the upper end of the piston 3 in Fig. 1 while the inner periphery of the extension side leaf valve 21 is fixed to the piston rod 2 and deflection on an outer peripheral side is allowed. The extension side leaf valve 21 closes the extension side port 3b when stacked on the piston 3, and the extension side leaf valve 21 opens the extension side port 3b when deflected by receiving the pressure of the extension side chamber R1 that acts via the extension side port 3b.

Furthermore, a closing body 6 is screwed to the screw portion 2b of the small-diameter portion 2a of the piston rod 2 on a sub-cylinder side that is located above the piston nut 22 in Fig. 1. As described above, the closing body 6 is attached as a connecting member to a distal end of the piston rod 2. In the present embodiment, the closing body 6 has a hexagonal nut shape that enables gripping with a wrench or the like (not illustrated), and includes a screw portion 6a screwed to the screw portion 2b on the inner periphery of the closing body 6 and a flat surface 6b having a circular annular shape at a sub-cylinder side end that is the upper end in Fig. 1. In addition, a stopper 23 that abuts on the lower end of the closing body 6 in Fig. 1 is attached to the outer periphery of the screw portion 2b of the piston rod 2 and on a side of the closing body 6 opposite to the sub-cylinder. The stopper 23 is a snap ring fitted in a groove (not illustrated) provided on the outer periphery of the small-diameter portion 2a of the piston rod 2, and abuts on the lower end of the closing body 6 to restrict the movement of the closing body 6 toward the lower side in Fig. 1, which is the side opposite to the sub-cylinder with respect to the piston rod 2.

In addition, the most distal end of the small-diameter portion 2a of the piston rod 2 has a tubular shape, and the closing body 6 is clamped by a flange portion 2d, which is formed by subjecting the most distal end to a swaging process, and the stopper 23, so that the closing body 6 is immovably fixed to the piston rod 2.

After the sub-cylinder 4 is fitted to the outer periphery of a protrusion 10b having a tubular and annular shape and provided at the lower end of the cap 10 shape in Fig. 1, the sub-cylinder 4 is fixed to the cap 10 by welding and is housed in the compression side chamber R2 in the cylinder 1. As described above, the upper end of the sub-cylinder 4 is closed by the cap 10, the outer diameter of the sub-cylinder 4 is smaller than the inner diameter of the cylinder 1, and an annular gap S is formed between the sub-cylinder 4 and the cylinder 1.

Furthermore, a partition wall 5 having a disk shape is attached to the inner periphery of the sub-cylinder 4, and the inside of the sub-cylinder 4 is partitioned by the partition wall 5 into the hydraulic pressure lock chamber L and the compensation chamber R on the side of the hydraulic pressure lock chamber L opposite to the piston. In the present embodiment, the sub-cylinder 4 is formed of two tubes 4a and 4b overlapped in two axial directions, and is manufactured integrally with the partition wall 5 by welding the end portions of the tubes 4a and 4b and the outer periphery of the partition wall 5 from an outer peripheral side after the tubes 4a and 4b are overlapped in the axial direction while the opening ends of the tubes 4a and 4b are fitted to the partition wall 5, with the inner diameters of the opening ends of the tubes 4a and 4b facing each other being large to enable fitting of the partition wall 5. By integrating the partition wall 5 with the sub-cylinder 4 as described above, it is possible to liquid-tightly partition the hydraulic pressure lock chamber L and the compensation chamber R without providing a seal member. Note that the processing method of providing the partition wall 5 in the sub-cylinder 4 is an example, and the partition wall 5 may be fixed to the sub-cylinder 4 by, for example, clamping the partition wall 5 fitted to the inner periphery of the sub-cylinder 4 with a pair of snap rings attached to the inner periphery of the sub-cylinder 4. In this case, it suffices that a space between the hydraulic pressure lock chamber L and the compensation chamber R is sealed by providing a seal ring in close contact with the inner periphery of the sub-cylinder 4 on the outer periphery of the partition wall 5.

In addition, a free piston 30 that is slidably in contact with the inner periphery of the sub-cylinder 4 and is movable in the axial direction and partitions the inside of the compensation chamber R into a gas chamber G and a liquid chamber A is inserted into the compensation chamber R on the inner periphery of the sub-cylinder 4. The free piston 30 includes, on the outer periphery thereof, a seal ring 30a slidably in contact with the inside of the sub-cylinder 4, and seals between the gas chamber G and the liquid chamber A. The gas chamber G is filled with compressed gas, and the liquid chamber A is filled with the same liquid as the liquid filled in the extension side chamber R1 and the compression side chamber R2. Note that in the shock absorber D of the present embodiment, the free piston 30 is used to partition the inside of the compensation chamber R into the gas chamber G and the liquid chamber A. However, an elastic partition wall such as a bladder, a diaphragm, or a bellows that can change volume distribution between the gas chamber G and the liquid chamber A may be used.

Furthermore, the sub-cylinder 4 includes an orifice 4c that penetrates the thickness of the sub-cylinder 4 and communicates the compression side chamber R2 with the liquid chamber A. The orifice 4c gives resistance to the flow of the liquid flowing back and forth between the compression side chamber R2 and the liquid chamber A of the compensation chamber R. Note that in the present embodiment, a cross-sectional area of the annular gap S between the sub-cylinder 4 and the cylinder 1 is larger than an opening area of the orifice 4c, so that resistance that the annular gap S gives to the flow of the liquid passing through the annular gap S is not larger than the resistance that the orifice 4c gives to the flow of the liquid passing through the orifice 4c. In the present embodiment, the orifice 4c gives the resistance to the flow of the liquid flowing back and forth between the compression side chamber R2 and the liquid chamber A of the compensation chamber R, but a flow path area of the annular gap S may be reduced to give resistance to the flow of the liquid passing through the annular gap S and flowing back and forth between the compression side chamber R2 and the liquid chamber A of the compensation chamber R, and the annular gap S may be used as a restriction flow path. In this case, it suffices that instead of the orifice 4c, a hole that hardly gives resistance to the flow of the liquid passing through the sub-cylinder 4 is provided to communicate the liquid chamber A with the compression side chamber R2 via the annular gap S.

In addition, a lock piece 31 is inserted into the hydraulic pressure lock chamber L in the sub-cylinder 4 so that the lock piece 31 is movable in the axial direction, and a spring 32 is interposed between the lock piece 31 and the partition wall 5. The lock piece 31 includes a head portion 31a having a circular annular shape and having a hole 31b at the center; and a tubular portion 31c rising upward in Fig. 1 from the outer periphery of the head portion 31a and facing the inner periphery of the sub-cylinder 4, and the lock piece 31 faces the closing body 6, which is attached to the distal end of the piston rod 2, in the axial direction.

A snap ring 33 that prevents the lock piece 31 from coming off from the hydraulic pressure lock chamber L is attached to the inner periphery of the sub-cylinder 4 in the vicinity of the lower end of the sub-cylinder 4 in Fig. 1, and the lock piece 31 is positioned at a position at which the lock piece 31 is biased by the spring 32 to abut on the snap ring 33 while the lock piece 31 is separated from the closing body 6 of the piston rod 2. Since the spring 32 is a conical coil spring and has a shorter overall length at the time of the maximum compression than that of a cylindrical coil spring, the stroke length of the lock piece 31 in the hydraulic pressure lock chamber L can be secured, and the axial length of the hydraulic pressure lock chamber L can be shortened. This does not prevent the spring 32 from being a cylindrical coil spring. Furthermore, the spring 32 may be an elastic body such as a wave washer, a disk spring, or rubber, in addition to the coil spring, as long as the spring 32 can bias the lock piece 31.

The outer diameter of the tubular portion 31c of the lock piece 31 is slightly smaller than the inner diameter of a portion forming the hydraulic pressure lock chamber L of the sub-cylinder 4, and the liquid can pass through a gap between the outer periphery of the lock piece 31 and the inner periphery of the sub-cylinder 4 while receiving resistance.

In addition, the inner diameter of the hole 31b in the head portion 31a is smaller than the outer diameter of the flat surface 6b of the closing body 6, the flat surface 6b having a circular annular shape, and is set to a diameter that allows the insertion of the flange portion 2d of the distal end portion of the piston rod 2. Therefore, in a state in which the closing body 6 and the lock piece 31 do not abut on each other, the hydraulic pressure lock chamber L and the compression side chamber R2 communicate with each other via the hole 31b of the lock piece 31 and the gap between the outer periphery of the lock piece 31 and the inner periphery of the sub-cylinder 4. However, when the piston rod 2 moves upward in Fig. 1 with respect to the cylinder 1 and the head portion 31a abuts on the flat surface 6b of the closing body 6, the hole 31b of the lock piece 31 is closed by the flat surface 6b of the closing body 6 and the piston rod 2, and the inside of the hydraulic pressure lock chamber L and the compression side chamber R2 communicate with each other only via the narrow gap between the outer periphery of the lock piece 31 and the inner periphery of the sub-cylinder 4.

The shock absorber D is configured as described above, and the actuation of the shock absorber D will be described hereinafter. First, actuation in a case where the shock absorber D performs extension will be described. When the piston rod 2 moves downward in Fig. 1 with respect to the cylinder 1 and the shock absorber D performs the extension, the liquid in the extension side chamber R1 reduced by the piston 3 passes through the extension side port 3b and moves to the compression side chamber R2 expanded by pushing and opening the extension side leaf valve 21. Since the extension side leaf valve 21 gives resistance to the flow of the liquid, pressure in the extension side chamber R1 increases, a difference occurs between pressure in the extension side chamber R1 and pressure in the compression side chamber R2, and the shock absorber D generates extension side damping force that prevents the extension. During the extension of the shock absorber D, the piston rod 2 moves out from inside the cylinder 1, so that in the compression side chamber R2, a shortfall occurs in a volume of the liquid corresponding to that of the piston moving out from the inside of the cylinder 1 of the piston rod 2. However, the shortfall of the liquid is supplied from the inside of the liquid chamber A to the inside of the compression side chamber R2 by the free piston 30 being displaced in a direction of expanding the gas chamber G in the sub-cylinder 4.

Conversely, actuation in a case where the shock absorber D performs contraction will be described. When the piston rod 2 moves upward in Fig. 1 with respect to the cylinder 1 and the shock absorber D performs the contraction, the liquid in the compression side chamber R2 contracted by the piston 3 passes through the compression side port 3c and moves to the extension side chamber R1 expanded by pushing and opening the compression side leaf valve 20. Since the compression side leaf valve 20 gives resistance to the flow of the liquid, the pressure in the compression side chamber R2 increases, a difference occurs between the pressure in the compression side chamber R2 and the pressure in the extension side chamber R1, and the shock absorber D generates compression side damping force that prevents the contraction. During the contraction of the shock absorber D, the piston rod 2 enters the cylinder 1, so that a volume of the liquid corresponding to that of the piston rod 2 entering the cylinder 1 becomes excessive in the compression side chamber R2. However, the excess of the liquid flows into the liquid chamber A of the compensation chamber R via the orifice 4c, and the free piston 30 is displaced in a direction of contracting the gas chamber G in the sub-cylinder 4. Note that the compensation chamber R communicates the compression side chamber R2 with the liquid chamber A via the orifice 4c, and the pressure in the compression side chamber R2 can increase beyond the pressure in the liquid chamber A. Therefore, the shock absorber D is capable of generating large compression side damping force as compared with a conventional monotube-type shock absorber.

When the shock absorber D performs the contraction and the piston rod 2 moves upward in Fig. 1 with respect to the cylinder 1, the closing body 6 attached to the distal end of the piston rod 2 eventually abuts on the head portion 31a of the lock piece 31 in the hydraulic pressure lock chamber L. When the flat surface 6b of the closing body 6 abuts on the lock piece 31 as described above, the hole 31b of the lock piece 31 is closed by the closing body 6 and the piston rod 2, and the communication between the hydraulic pressure lock chamber L and the compression side chamber R2 by the hole 31b is cut off. When the piston rod 2 further moves upward in Fig. 1 with respect to the cylinder 1 from this state and the shock absorber D contracts, the lock piece 31 is pressed by the closing body 6 and moves in a direction of compressing the inside of the hydraulic pressure lock chamber L, and the closing body 6 as a connecting member is inserted into the hydraulic pressure lock chamber L. When the closing body 6 abuts on the head portion 31a of the lock piece 31, the hydraulic pressure lock chamber L and the compression side chamber R2 are in a state of communicating with each other only through the gap between the lock piece 31 and the sub-cylinder 4. Therefore, when the piston rod 2 enters the hydraulic pressure lock chamber L by the movement of the piston rod 2 in the contraction direction with respect to the cylinder 1 and the lock piece 31 pushed by the closing body 6 contracts the hydraulic pressure lock chamber L, the liquid in the hydraulic pressure lock chamber L moves to the compression side chamber R2 through the gap while receiving resistance. Therefore, the pressure in the hydraulic pressure lock chamber L increases to be equal to or higher than the pressure in the compression side chamber R2, and the piston rod 2 is pressed downward in Fig. 1 together with the lock piece 31 by the action of the pressure in the hydraulic pressure lock chamber L.

When the shock absorber D is displaced to the vicinity of the stroke end toward the contraction side, as described above, the closing body 6 abuts on the lock piece 31 to increase the pressure in the hydraulic pressure lock chamber L and exert a hydraulic pressure lock function. Therefore, the shock absorber D can generate larger compression side damping force on the pressure side by adding resistance force due to the pressure increase in the hydraulic pressure lock chamber L to damping force by the compression side leaf valve 20.

When the shock absorber D performs the contraction to the vicinity of the stroke end and then performs the extension, the piston rod 2 moves out from inside the hydraulic pressure lock chamber L, and the lock piece 31 can return to an initial position at which the lock piece 31 abuts on the snap ring 33 before the lock piece 31 is biased by the spring 32 to compress the hydraulic pressure lock chamber L.

As described above, the shock absorber D according to the present embodiment includes the cylinder 1; the piston rod 2 movably inserted in the cylinder 1 in the axial direction; the piston 3 connected to the piston rod 2, movably inserted in the cylinder 1 in the axial direction, and partitioning the inside of the cylinder 1 into the extension side chamber R1 and the compression side chamber R2; the sub-cylinder 4 housed in the compression side chamber R2 in the cylinder 1; and the partition wall 5 partitioning the inside of the sub-cylinder 4 into the hydraulic pressure lock chamber L and the compensation chamber R on the side of the hydraulic pressure lock chamber L opposite to the piston. The compensation chamber R has the gas chamber G and the liquid chamber A communicating with the compression side chamber R2. When the piston rod 2 moves in a contraction direction in which the piston rod 2 compresses the compression side chamber R2 with respect to the cylinder 1 and the closing body 6 as a connecting member connected to the piston rod 2 is inserted into the hydraulic pressure lock chamber L, the hydraulic pressure lock chamber L suppresses the movement of the piston rod 2 in the contraction direction by internal pressure.

In the shock absorber D of the present embodiment configured as described above, when the contraction is performed and the piston 3 moves in the contraction direction and the piston rod 2 enters the hydraulic pressure lock chamber L, resistance force that suppresses the movement of the piston rod 2 by the pressure of the hydraulic pressure lock chamber L can be added to the damping force during the contraction. Therefore, with the shock absorber D of the present embodiment, it is possible to generate damping force larger than that of a conventional shock absorber when the shock absorber D contracts to the vicinity of the stroke end. Additionally, when the shock absorber D configured as described above is interposed between the vehicle body and a wheel of the straddle-type vehicle and used, so-called bottoming, that is, contracting to the stroke end when the straddle-type vehicle travels on a rough road can be suppressed.

In addition, since the shock absorber D of the present embodiment can generate large damping force when the shock absorber D contracts to the vicinity of the stroke end, an impact at the time of the maximum contraction can be mitigated without generating large resilient force by the bump cushion rubber 18, and the bump cushion rubber 18 can be reduced in size and weight. In addition, since the shock absorber D of the present embodiment can generate large damping force when the shock absorber D contracts to the vicinity of the stroke end, it is unnecessary to compensate for a shortage of the damping force by changing a spring constant as the compression of the suspension spring 8 progresses, so that a structure of the suspension spring 8 is simplified and productivity is improved.

Furthermore, the shock absorber D of the present embodiment includes the lock piece 31 that has the hole 31b and is inserted into the hydraulic pressure lock chamber L in the sub-cylinder 4 so that the lock piece 31 is movable in the axial direction; the spring 32 that is interposed between the lock piece 31 and the partition wall 5 and biases the lock piece 31 toward a piston side; and the closing body 6 that is provided at the distal end of the piston rod 2 and closes the hole 31b when the closing body 6 abuts on the lock piece 31, and the closing body 6 is a connecting member.

In the shock absorber D configured as described above, the piston rod 2 approaches the sub-cylinder 4 to close the hole 31b of the lock piece 31 that compresses the hydraulic pressure lock chamber L by the closing body 6 provided on a side of the piston rod 2, and the hydraulic pressure lock chamber L can be compressed by the piston rod 2, the closing body 6, and the lock piece 31. Therefore, even if there is a deviation in an axial line between the piston rod 2 and the sub-cylinder 4, the hydraulic pressure lock chamber L is compressed to increase the pressure in the hydraulic pressure lock chamber L, so that desired large compression side damping force can be obtained in the vicinity of the stroke end.

Note that if there is no problem of axial deviation between the piston rod 2 and the sub-cylinder 4, the lock piece 31, the spring 32, and the snap ring 33 housed in the sub-cylinder 4 may be eliminated, a lock piece having a circular annular shape may be provided as a connecting member on the outer periphery of the piston rod 2, and when the piston rod 2 enters the sub-cylinder 4 together with the lock piece, the hydraulic pressure lock chamber L may be compressed by the lock piece provided on the piston rod 2 to increase the internal pressure and suppress the movement of the piston rod 2 in the contraction direction.

Note that in the shock absorber D of the present embodiment, the closing body 6 is provided as a connecting member connected to the piston rod 2, and the hydraulic pressure lock chamber L suppresses the movement of the piston rod 2 in the contraction direction by the insertion of the closing body 6 into the hydraulic pressure lock chamber L. However, the hydraulic pressure lock chamber L may suppress the movement of the piston rod 2 in the contraction direction by the distal end of the piston rod 2 being inserted into the hydraulic pressure lock chamber L without providing the connecting member. In this case, it suffices that, for example, when a distal end surface of the piston rod 2 abuts on the lock piece 31, the hole 31b is closed by the distal end surface. In addition, in a case where the connecting member is not provided and the lock piece 31, the spring 32 and the snap ring 33 are eliminated, the inner diameter of the tube 4a of the sub-cylinder 4 forming the hydraulic pressure lock chamber L may be made slightly larger than the outer diameter of the tip of the piston rod 2, and when the distal end of the piston rod 2 is inserted into the hydraulic pressure lock chamber L, the pressure in the hydraulic pressure lock chamber L may be increased to suppress the movement of the piston rod 2 toward the contraction side. As described above, the shock absorber D may generate the hydraulic pressure lock function by attaching some kind of a connecting member to the distal end of the piston rod 2 and inserting the connecting member into the hydraulic pressure lock chamber L, or may generate the hydraulic pressure lock function by the insertion of the distal end of the piston rod 2 itself into the hydraulic pressure lock chamber L.

In addition, in the shock absorber D of the present embodiment, when the hydraulic pressure lock chamber L is compressed, the liquid flowing from the hydraulic pressure lock chamber L to the compression side chamber R2 passes through the gap between the lock piece 31 and the sub-cylinder 4, and the pressure in the hydraulic pressure lock chamber L is increased by giving resistance to the flow of the liquid in the gap. However, the pressure in the hydraulic pressure lock chamber L may be increased by causing the lock piece 31 to be slidably in contact with the inner periphery of the sub-cylinder 4; forming a passage that functions as an orifice or a choke at the lock piece 31, at the closing body 6, between a lock piece and the closing body 6, or at the piston rod 2 instead of the gap; and causing the liquid to pass through the passage. Furthermore, the sub-cylinder 4 may be provided with an orifice or a choke that communicates the hydraulic pressure lock chamber L and the compression side chamber R2. In addition, although the closing body 6 has a hexagonal shape, the shape and structure of the closing body 6 can be appropriately changed as long as when the closing body 6 abuts on the lock piece 31, the closing body 6 can close the hole 31b of the lock piece 31 and when the piston rod 2 enters the hydraulic pressure lock chamber L, the closing body 6 can compress the hydraulic pressure lock chamber L together with the lock piece 31. Note that even in a case where a groove is provided on one or both of the abutment surfaces of the closing body 6 and the lock piece 31 and the groove is caused to function as an orifice or a choke for increasing the pressure in the hydraulic pressure lock chamber L, the hole 31b is not completely closed with the closing body 6 abutting on the lock piece 31. However, even such a case is included in the concept that the closing body 6 closes the hole 31b as long as the function of the hydraulic pressure lock chamber L can be achieved.

Note that the lock piece 31 may be made of metal, but when the lock piece 31 is made of resin, it is possible to reduce a hitting sound when the lock piece 31 abuts on the closing body 6, and it is possible to suppress damage to an inner peripheral surface in the sub-cylinder 4 when the lock piece 31 moves in the sub-cylinder 4.

In addition, in the shock absorber D of the present embodiment, since the sub-cylinder 4 includes, on a side, the orifice 4c that communicates the compression side chamber R2 with the liquid chamber A, pressure in the compression side chamber R2 can be made higher than the pressure in the compensation chamber R during the contraction of the shock absorber D, so that the compression side damping force during the contraction can be increased. Therefore, when the shock absorber D configured as described above is interposed between the vehicle body and the wheel of the straddle-type vehicle and used, the bottoming can be further suppressed when the straddle-type vehicle travels on a rough road.

Furthermore, in the shock absorber D of the present embodiment, the closing body 6 is attached to the outer periphery of the distal end of the piston rod 2, the piston 3 has the extension side port 3b and the compression side port 3c, each of which has an annular shape, that are attached to the outer periphery of the piston rod 2 on a side closer to the closing body 6 and opposite to the sub-cylinder, and that communicate the extension side chamber R1 with the compression side chamber R2, and there are provided the compression side leaf valve 20 that has an annular shape, whose inner periphery is fixed to the outer periphery of the piston rod 2, that is overlapped on an extension side end of the piston 3, and that is configured to open and close the compression side port 3c; the extension side leaf valve 21 that has an annular shape, whose inner periphery is fixed to the outer periphery of the piston rod 2, that is overlapped on a compression side end of the piston 3, and that is configured to open and close the extension side port 3b; and the stopper 23 attached to the outer periphery of the piston rod 2 and abutting on the side opposite to the sub-cylinder of the closing body 6. In the shock absorber D configured as described above, when the shock absorber D performs the contraction to the vicinity of the stroke end, the closing body 6 provided on the piston rod 2 abuts on the lock piece 31 to compress the hydraulic pressure lock chamber L together with the lock piece 31, thereby increasing the pressure in the hydraulic pressure lock chamber L. The pressure in the hydraulic pressure lock chamber L presses the closing body 6 against the piston rod 2 toward a side of the piston 3. However, since the movement of the closing body 6 toward the piston 3 is restricted by the stopper 23 attached to the piston rod 2, a load in the axial direction applied to the closing body 6 by the pressure in the hydraulic pressure lock chamber L does not act on the compression side leaf valve 20, the piston 3, and the extension side leaf valve 21. Therefore, in the shock absorber D of the present embodiment configured as described above, even if the closing body 6 is provided on the piston rod 2, a load in the axial direction, which is received by the pressure of the hydraulic pressure lock chamber L, does not act on the compression side leaf valve 20, the piston 3, and the extension side leaf valve 21. Therefore, the compression side leaf valve 20, the piston 3, and the extension side leaf valve 21 can be prevented from deteriorating, and the extension side and compression side damping force can be generated as designed.

Note that the vertical arrangement of the gas chamber G and the liquid chamber A in the compensation chamber R may be reversed from that illustrated in Fig. 1. In addition, in the shock absorber D of the present embodiment, the orifice 4c that communicates the liquid chamber A with the compression side chamber R2 is provided in the sub-cylinder 4 to assist a pressure increase in the compression side chamber R2 during the contraction. However, a restriction flow path that communicates the liquid chamber A with the compression side chamber R2 through a hole that cannot function as an orifice and gives resistance to the flow of the liquid in a gap between the cylinder 1 and the sub-cylinder 4 may be provided to assist a pressure increase in the compression side chamber R2 during the contraction. However, in a case where the pressure increase in the compression side chamber R2 during the contraction is assisted by the orifice 4c whose area can be easily managed, there is an advantage that the pressure in the compression side chamber R2 and the pressure in the liquid chamber A can be easily adjusted. In addition, the diameter of the sub-cylinder 4 on a side of the hydraulic pressure lock chamber L and the diameter of the sub-cylinder 4 on a side of the compensation chamber R are equal, but may be different. Furthermore, in the shock absorber D of the present embodiment, since the sub-cylinder 4 is held by the cap 10, each component to be assembled to the sub-cylinder 4 can be assembled to the cap 10 together with the sub-cylinder 4 to form a sub-cylinder assembly, and the shock absorber D can be easily assembled. However, the structure of housing and fixing the sub-cylinder 4 in the cylinder 1 is not limited to the structure illustrated in Fig. 1 and can be modified in design as appropriate.

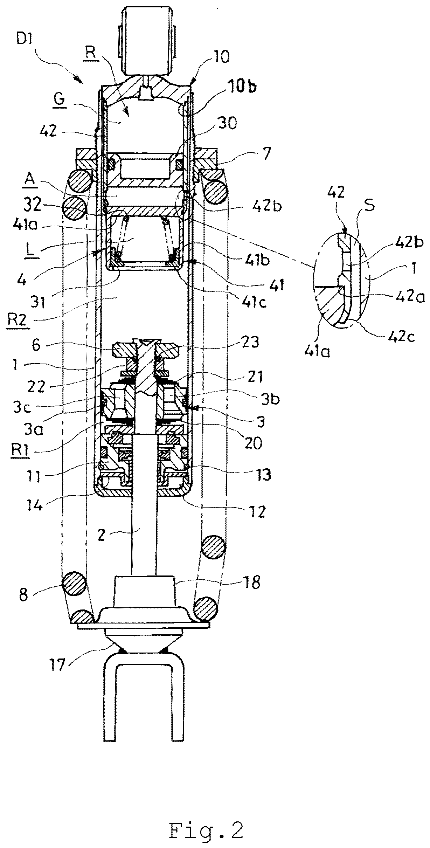

For example, as in a shock absorber D1 in a first modification of the one embodiment illustrated in Fig. 2, a sub-cylinder 4 may be formed of a bottomed tubular first tube 41 that has a bottomed tubular shape and forms a hydraulic pressure lock chamber L using a bottom portion 41a as a partition wall; and a second tube 42 that is fitted to the outer periphery of a bottom portion side end of the first tube 41 and that holds the first tube 41 by being swaged from an outer peripheral side to form a compensation chamber R.

The first tube 41 includes the bottom portion 41a having a disk shape; and a tubular portion 41b having an outer diameter smaller than the outer diameter of the bottom portion 41a and hanging down from the bottom portion 41a toward a piston side, and the first tube 41 is housed in a compression side chamber R2 in a cylinder 1 and forms a hydraulic pressure lock chamber L therein. A lock piece 31 is movably inserted into the first tube 41 in an axial direction, and a spring 32 that is a conical coil spring is interposed between the lock piece 31 and the bottom portion 41a. In addition, the lower end of the tubular portion 41b in Fig. 2 is bent toward an inner peripheral side, a bent portion 41c is formed at the lower end of the tubular portion 41b, and the bent portion 41c prevents the lock piece 31 from coming off from the hydraulic pressure lock chamber L. The lock piece 31 is positioned at a position at which the lock piece 31 is biased by the spring 32 to abut on the bent portion 41c while the lock piece 31 is separated from a closing body 6 of a piston rod 2.

After the second tube 42 is fitted to the outer periphery of a protrusion 10b having a cylindrical and annular shape and provided at the lower end of a cap 10 in Fig. 2, the second tube 42 is fixed to the cap 10 by welding and is housed in the compression side chamber R2 in the cylinder 1 to form the compensation chamber R therein. In addition, the inner diameter of the lower end of the second tube 42 in Fig. 2 is larger than that of the upper end, and a step portion 42a is provided on an inner periphery and an orifice 42b penetrating thickness in a radial direction is provided closer to a side opposite to the piston than the step portion 42a. The inner diameter of the lower end of the second tube 42 is set to a diameter that allows the bottom portion 41a of the first tube 41 to be inserted. The axial length of the portion 42c having a large inner diameter in the second tube 42 is longer than the axial length of the bottom portion 41a in the first tube 41.

In order to connect the first tube 41 and the second tube 42 configured as described above, the bottom portion side end of the first tube 41 is inserted into the lower end of the second tube 42, and the bottom portion 41a of the first tube 41 is caused to abut on the step portion 42a of the second tube 42. In this state, the portion 42c having a large inner diameter at the lower end of the second tube 42 is swaged from an outer peripheral side as a swaging portion and plastically deformed so that the portion 42c grips the bottom portion 41a, whereby the second tube 42 and the first tube 41 are connected to each other. As described above, when the sub-cylinder 4 is formed of the first tube 41 having a bottomed tubular shape and forming the hydraulic pressure lock chamber L and the second tube 42 that is fitted to the outer periphery of the bottom portion side end of the first tube 41 and is swaged from the outer peripheral side to hold the first tube 41 and form the compensation chamber R, a distortion due to welding does not occur between the first tube 41 and the second tube 42, and the inner peripheral surfaces of the first tube 41 and the second tube 42 do not require post-processing. Therefore, the sub-cylinder 4 can be manufactured inexpensively and easily. In addition, since the hydraulic pressure lock chamber L is formed of the first tube 41 having a bottomed tubular shape, there is no concern that liquid leaks from the inside of the hydraulic pressure lock chamber L to the inside of the compression side chamber R2 via a portion other than a portion between the tubular portion 41b and the lock piece 31 when the hydraulic pressure lock function is exerted. Thus, the hydraulic pressure lock function can be stably exhibited.

In addition, even if the liquid in the compensation chamber R leaks from between the first tube 41 and a lower end portion 42d serving as a swaging portion of the second tube 42 to the compression side chamber R2, there is no problem since only a liquid chamber A faces a joint portion between the first tube 41 and the second tube 42, and the liquid chamber A and the compression side chamber R2 are always in a communicating state. There is no influence on the hydraulic pressure lock chamber L since the hydraulic pressure lock chamber L is formed of the inside of the first tube 41 having a bottomed tubular shape.

In addition, regarding the holding of the first tube 41 by the second tube 42, as long as a holding state can be maintained by fitting the second tube 42 into the outer periphery of the first tube 41, the second tube 42 may hold the first tube 41 by fitting.

Note that a first tube to form a hydraulic pressure lock chamber L is formed into a cylindrical shape, a second tube to be connected to a cap 10 and form a compensation chamber R is formed into a bottomed tubular shape, the first tube is fitted to the outer periphery of the bottom portion side end of the second tube, the first tube is swaged from an outer peripheral side toward a bottom portion of the second tube, whereby it is also possible to form a sub-cylinder 4 with the first tube and the second tube connected to each other.

Although the preferred embodiments of the present invention has been described above in detail, modifications, variations, and changes can be made thereto without departing from the claims.

### Reference Signs List

- 1: Cylinder
- 2: Piston rod
- 3: Piston
- 3b: Extension side port
- 3c: Compression side port
- 4: Sub-cylinder
- 4c: Orifice
- 5: Partition wall
- 6: Closing body (connecting member)
- 20: Compression side leaf valve
- 21: Extension side leaf valve
- 23: Stopper
- 31: Lock piece
- 31b: Hole
- 32: Spring
- 41: First tube
- 41a: Bottom portion
- 42: Second tube
- A: Liquid chamber
- D: Shock absorber
- G: Gas chamber
- L: Hydraulic pressure lock chamber
- R: Compensation chamber
- R1: Extension side chamber
- R2: Compression side chamber
- S: Annular gap

## Claims

1. A shock absorber comprising:
a cylinder;
a piston rod movably inserted into the cylinder in an axial direction;
a piston connected to the piston rod, the piston being movably inserted into the cylinder in the axial direction, the piston partitioning the inside of the cylinder into an extension side chamber and a compression side chamber;
a sub-cylinder housed in the compression side chamber in the cylinder; and
a partition wall partitioning the inside of the sub-cylinder into a hydraulic pressure lock chamber and a compensation chamber on a side of the hydraulic pressure lock chamber opposite to the piston, wherein
the compensation chamber has a gas chamber and a liquid chamber communicating with the compression side chamber,
when the piston rod moves in a contraction direction in which the piston rod compresses the compression side chamber with respect to the cylinder and a distal end of the piston rod or a connecting member connected to the piston rod is inserted into the hydraulic pressure lock chamber, the hydraulic pressure lock chamber suppresses movement of the piston rod in the contraction direction by internal pressure.

2. The shock absorber according to claim 1, further comprising:
a lock piece having a hole and inserted into the hydraulic pressure lock chamber in the sub-cylinder so that the lock piece is movable in the axial direction;
a spring interposed between the lock piece and the partition wall to bias the lock piece toward a piston side; and
a closing body provided at the distal end of the piston rod and configured to close the hole when the closing body abuts on the lock piece, wherein
the connecting member is the closing body.

3. The shock absorber according to claim 1, wherein
the sub-cylinder has, on a side, an orifice communicating the compression side chamber with the liquid chamber.

4. The shock absorber according to claim 1, wherein
a restriction flow path that gives resistance to a flow of liquid flowing back and forth between the compression side chamber and the compensation chamber in an annular gap between the cylinder and the sub-cylinder is formed.

5. The shock absorber according to claim 1, wherein
the sub-cylinder has a bottomed tubular first tube having a bottomed tubular shape and having a bottom portion as the partition wall to form a hydraulic pressure lock chamber and a second tube fitted to an outer periphery of a bottom portion side end of the first tube and holding the first tube to form a compensation chamber.

6. The shock absorber according to claim 2, wherein
the closing body is attached to an outer periphery of the distal end of the piston rod,
the piston has an extension side port and a compression side port, the extension side port and the compression side port each having an annular shape, the extension side port and the compression side port being attached to an outer periphery of the piston rod on a side closer to the closing body and opposite to the sub-cylinder, the extension side port and the compression side port communicating the extension side chamber with the compression side chamber, and
there are provided a compression side leaf valve having an annular shape, the compression side leaf valve having an inner periphery fixed to the outer periphery of the piston rod, the inner periphery being overlapped on an end of the piston on an extension side chamber side, the compression side leaf valve being configured to open and close the compression side port;
an extension side leaf valve having an annular shape,
the extension side leaf valve having an inner periphery fixed to the outer periphery of the piston rod, the inner periphery being overlapped on an end of the piston on a compression side chamber side, the extension side leaf valve being configured to open and close the extension side port; and
a stopper attached to the outer periphery of the piston rod and abutting on a side of the closing body opposite to the sub-cylinder.

7. The shock absorber according to claim 2, wherein
the spring is a conical coil spring.
